# EUROPÄISCHE PATENTSCHRIFT

(11) **EP 3 272 480 B1**
(45) Veröffentlichungstag und Bekanntmachung des Hinweises auf die Patenterteilung: **07.12.2022**
(21) Anmeldenummer: 16001607.7
(22) Anmeldetag: 21.07.2016
(51) Int. Cl.: B27N 5/00

(54) **VERFAHREN ZUR HERSTELLUNG EINER FASERPLATTE**
METHOD FOR PRODUCING A FIBREBOARD PANEL
PROCÉDÉ DE FABRICATION D'UN PANNEAU DE FIBRES

(43) Veröffentlichungstag der Anmeldung: 24.01.2018
(73) Patentinhaber: Homann Holzwerkstoffe GmbH, 81925 München (DE)
(72) Erfinder: HOMANN, Fritz, 81925 München (DE)
(74) Vertreter: Brinkmann & Partner

(56) Entgegenhaltungen:
- EP-A1- 0 004 999
- EP-A1- 1 110 687
- DE-A1- 2 364 025
- DE-A1- 4 342 789
- DE-A1- 10 153 175
- GB-A- 1 129 457
- GB-A- 2 261 845
- US-A- 6 136 239
- US-A1- 2008 197 536
- US-A1- 2013 284 357
- JAN E.G. VAN DAM ET AL: "Production process for high density high performance binderless boards from whole coconut husk", INDUSTRIAL CROPS AND PRODUCTS., Bd. 20, Nr. 1, 1. Juli 2004 (2004-07-01), Seiten 97-101, XP055301444, NL ISSN: 0926-6690, DOI: 10.1016/j.indcrop.2003.12.017

## Beschreibung

Die vorliegende Erfindung betrifft ein Verfahren zur Herstellung einer Faserplatte nach dem Oberbegriff von Anspruch 1

Faserplatten aus lignocellulose-haltigen Fasern, insbesondere Holzfasern, als solche sowie Verfahren zu deren Herstellung sind aus dem Stand der Technik an sich gut bekannt, so dass es eines gesonderten druckschriftlichen Nachweises an dieser Stelle nicht bedarf.

Bei einer mitteldichten Faserplatte, kurz MDF-Platte genannt, handelt es sich typischerweise um eine Platte aus einem Holzfaserwerkstoff. Nach der einschlägigen europäischen Norm liegt die mittlere Rohdichte einer MDF-Platte zwischen 650 kg/m³ und 800 kg/m. Platten mit einer mittleren Rohdichte von über 800 kg/m³ werden als hochdichte Faserplatten (HDF) und mit einer mittleren Rohdichte von unter 650 kg/m³ als Leicht-MDF bezeichnet. Bei einer mittleren Rohdichte von unter 550 kg/m³ spricht man von Ultraleicht-MDF.

Die Herstellung einer mitteldichten Faserplatte und auch einer ultraleicht-MDF Platte erfolgt typischerweise im sogenannten Trockenverfahren. Danach werden in der sogenannten Blow-Line-Beleimung beleimte und trockene Fasern hergestellt, die einen Feuchtigkeitsgehalt von unter 12% atro aufweisen, wobei alternative Beleimungsmethoden aus dem Stand der Technik bekannt sind. Alternative Beleimungsmethoden sind beispielsweise die Mischerbeleimung und die Trockenfaserbeleimung. Nach einer Beleimung der Fasern erfolgt alternativ oder optional ein weiterer Trocknungsvorgang. Aus dem Stand der Technik ist auch die Verwendung sogenannter Mehrkomponentenfasern, beispielsweise bico-Fasern bekannt. Es handelt sich um Fasern mit unterschiedlichen Leimkomponenten, die beispielsweise durch Temperatur aktivierbar sind.

Die trocknen und beleimten bzw. gemischten Fasern werden alsdann beispielsweise mittels einer Streumaschine zu einer Streumatte ausgebracht. Es kommt zu diesem Zweck typischerweise ein Transportband zum Einsatz, auf welches die Streumaschine abstreut. In einem letzten Verfahrensschritt wird die Streumatte verpresst und es findet eine Bindemittelaushärtung durch Wärmeeintrag statt. Dies erfolgt in aller Regel auf kontinuierlich oder diskontinuierlich arbeitenden Heißpressen.

Der in vorbeschriebener Weise hergestellte Plattenstrang kann dann zur Ausbildung einzelner Platten wunschgemäß besäumt und abgelängt werden.

Die vorbeschriebene Verfahrensdurchführung ist aus dem Stand der Technik hinlänglich bekannt.

Eine weiterentwickelte Verfahrensdurchführung ist aus der EP 1 110 687 B2 bekannt geworden. Das hier beschriebene Verfahren betrifft die Herstellung von leichten Faserplatten mit einer mittleren Rohdichte von 60 bis 350 kg/m3, die als Wärmedämmplatten im Bauwesen Verwendung finden. Dabei besteht die Besonderheit des hier beschriebenen Verfahrens darin, dass ein Rohdichteprofil ausgebildet wird, wonach sich eine Randerhöhung der Rohdichte gegenüber der mittleren Rohdichte der Faserplatte von mindestens 20% ergibt. Dies wird verfahrenstechnisch dadurch erreicht, dass die Streumatte vor einem Verpressen deckseitig mit Wasser besprüht wird. Im Ergebnis ergibt sich eine leichte Faserplatte, die hinsichtlich ihrer großen Oberfläche Randbereiche aufweist, deren Dichte um wenigstens 20% über der mittleren Rohdichte liegt. Diese Randbereiche weisen typischerweise eine Dicke von ca. 0,2 mm bis 0,5 mm auf.

Es ist weiterhin bekannt, entsprechende Platten, insbesondere ultraleichte MDF-Platten als Sandwichplatten herzustellen. Dabei werden Außenschichten aus einem ersten Faser-/Bindemittelsystem hergestellt und dazwischenliegende Bereiche aus einem zweiten Faser-/Bindemittelsystem. Es werden sich somit Platten herstellen, die in der Handhabung, in der Verarbeitung und Weiterverarbeitung vereinfacht sind.

Weiterer Stand der Technik ist insbesondere durch die US 2008/0197536 A1, die DE 23 64 025 A1, die EP 0 004 999 A1 und die US 6136239 A gegeben.

Dabei offenbart die US 2008/0197536 A1 ein Formteil aus Holzfasern. Dieses entsteht aus einem getrockneten vorgeformten Zwischenprodukt. Bei dem Formteil kann es sich um eine Faserplatte handeln, die eigenstabil und gewellt ausgebildet ist. Sie besteht aus Holzfasern und Bindemittel, wobei als Bindemittel beispielsweise Isocyanidharze oder Phenol/Formaldehydharze verwendet können. Als Faserplatte kommt insbesondere eine HDF-Platte in Frage. Die DE 23 64 025 A1 betrifft Mischungen aus einem Elastomer und Fasern zur Herstellung von Formteilen, wobei eine Vormischung als Fasermatte ausgebildet wird.

Die EP 0 004 999 A1 betrifft die Herstellung stark profilierter Formteile aus tiefziehfähigen, vorfabrizierten und schwach verdichteten Fasermatten.

Aus der US 6 137 239 A1 ist die Herstellung von HDF-Platten unter Verwendung von Bindemitteln bekannt, welche Bindemittel mittels Dampfbeaufschlagung aktivierbar sind.

Die vorbekannten Platten unterschiedlichster Art werden für unterschiedlichste Verwendungszwecke eingesetzt, Matten als Dämmstoffe, HDF-Platten zum Ausfachen, Verkleiden, Abdecken und dergleichen. Allerdings sind die bekannten Matten und Platten aufgrund ihrer unterschiedlichen Dichten und Herstellungsparameter mit unterschiedlichsten mechanischen Eigenschaften versehen. Es besteht ein Bedarf an möglichst leichten und dennoch äußerst stabilen Platten, der jedoch bisher noch nicht befriedigend gedeckt werden kann. Entweder sind die Platten mechanisch sehr widerstandsfähig, dann sind sie üblicherweise aufgrund hoher Verdichtung mit einer vollen Rohdichte versehen, also schwer, oder sie sind entsprechend leichter und nicht so stabil. Durch Materialkombination wurde versucht, hier Abhilfe zu schaffen. Hier sind aber auch Beschränkungen durch die Verfahrenstechnik und die Fertigungsmaschinen hinzunehmen.

Ausgehend vom vorbeschriebenen Stand der Technik liegt der Erfindung die **Aufgabe** zugrunde, ein Verfahren zur Herstellung einer Faserplatte bereitzustellen, welche Faserplatte eine hohe Stabilität einerseits mit einem vergleichsweise geringeren Gewicht kombinierbar macht und gleichwohl mit geringem wirtschaftlichen Aufwand herstellbar ist.

Zur Lösung dieser Aufgabe wird mit der Erfindung vorgeschlagen ein Verfahren mit den Merkmalen des Patentanspruches 1. Weitere Vorteile und Merkmale ergeben sich aus den Unteransprüchen.

Es wird zunächst, wie im Stand der Technik, eine vorbestimmte Menge eines getrockneten Faser-/Bindemittelgemisches auf einem Formband ausgebracht. Üblicherweise erfolgt dort die Gewichtsbestimmung und das ausgebrachte Material wird auf eine vorbestimmte Höhe verdichtet. Während im Stand der Technik an dieser Stelle der Formkuchen in lange Pressstrecken eingeführt wird, in denen eine Erhitzung und schließlich in einem Ofen eine Aushärtung erfolgen, wird dies bei dem erfindungsgemäßen Verfahren auf einem Verformungsbereich verlagert.

Zur Aktivierung der Bindemittel, welche üblicherweise in Form von bikomponenten oder mehrkomponenten Fasern in das Gemisch eingebracht sind, wird eine Aktivierungstemperatur und gegebenenfalls eine Grundfeuchte benötigt. Die Grundfeuchte ist dabei üblicherweise auch Träger für die thermische Behandlung.

Nach der Aktivierung folgt in der Verformungsstation die Verformung, an welche sich unmittelbar die Aushärtung anschließt.

In besonders vorteilhafter Weise wird kurz vor der Verformungsstation der Faserkuchen mit Dampf beaufschlagt, wodurch die Aktivierung der Bindemittel erfolgt. In der anschließenden Verformungsstation erfolgt direkt die Aushärtung in verformtem Zustand.

Erfindungsgemäß wird dieser Verfahrensschritt in einem Walzenpaar ausgeführt.

Erfindungsgemäße Walzen können an den Oberflächen so ausgebildet sein, dass sie den Faserkuchen in entsprechender Weise verformen. Die Walzen sind beheizt, wozu unterschiedlichste Verfahren einsetzbar sind. So können die Walzen elektrisch beheizt sein, mit heißem Öl gefüllt sein, Kombinationen davon aufweisen, und sie können mit zusätzlichen externen Behandlungsquellen wie beispielsweise UV-Strahlung, IR-Strahlung und dergleichen, Gasbrenner usw. kombiniert sein. Wesentlich ist, dass zwischen den Walzen die Verformung in den aktivierten Faserkuchen eingebracht und durch unmittelbares Aushärten beibehalten wird. Je nach Anlagentechnik kann es sinnvoll sein, Trennmittel zu verwenden, um ein Anbacken von Faserkuchen an Bearbeitungsflächen zu unterbinden.

Gemäß einem vorteilhaften Vorschlag findet die Herstellung vom Ausdünnen des Faserkuchens durch Ausstreuen des Fasergemisches bis hin zur Aushärtung der Platte in einem kontinuierlichen Verfahren statt.

Gemäß einem vorteilhaften Vorschlag findet anschließend eine Konfektionierung statt.

Ein wesentlicher Aspekt der vorliegenden Erfindung ist die Bereitstellung einer neuartigen und erfinderischen Formstation für die Herstellung entsprechender Faserplatten. Die Formstation umfasst in erfindungsgemäßer Weise ein Walzenpaar zur Verformung und Aushärtung eines aktivierten Faserkuchens. Dieses Walzenpaar umfasst wenigstens eine in beschriebener Weise beheizte Walze, wobei beide Walzen in ihren Oberflächen so ausgebildet sind, dass sie die gewünschte Verformung in den Faserkuchen einbringen können. Der Begriff Walze im Sinne der vorliegenden Erfindung ist dabei weit zu fassen, wobei es sich auch um kurze Bandeinheiten handeln kann.

Die Faserplatte härtet nach sehr kurzer Behandlung mit Wärme und Feuchtigkeit aus. Sie bleibt, einmal verformt, stabil in der Form. Sie benötigt keinerlei Stege und ist jederzeit reproduzierbar. Darüber hinaus ist sie ressourcenschonend und recyclebar. Mehr als 80 % der Bestandteile sind organischer Natur. Sie kann mit formaldehydfreien Bindemitteln hergestellt werden und kann im Vergleich zu anderen Leichtbaukonstruktionen auch ohne Rahmen aufgrund der hohen Eigenstabilität eingesetzt werden. Konstruktionsbedingt kann sie eine höhere Stabilität vorweisen als vergleichbare Vollmaterialprodukte, füllt aber ein großes Volumen bei geringem Gewicht. Darüber hinaus kann sie mit einer glatten, homogenen Oberfläche versehen sein, so dass sie direkt mit unterschiedlichen Materialien beschichtbar beziehungsweise kaschierbar ist.

Die Faserplatte eignet sich in besonderer Weise je nach Anwendungsfall für den Aufbau von Sandwichprodukten. So können gleichartige Faserplatten übereinander gelegt werden. Werde diese winklig zueinander angeordnet entsteht ein sehr großvolumiger Verbund mit zwei leichten verformten Faserplatten. Auch können ebene Platten aufgesetzt werden. Diese Art der Beplankung führt zu sehr stabilen Elementen. Diese können beispielsweise als Türblatt und dergleichen verwendet werden. Während im Stand der Technik bei Wabenbauten und dergleichen üblicherweise gesamtflächige Beleimungen zur Herstellung von Sandwichverbund vorgenommen werden, weil der Leim in der Regel aufgespritzt wird, ist es im Rahmen der Erfindung möglich, nur in einem minimalen Berührungsbereich zwischen benachbarten Platten Leim aufzubringen. Es ist denkbar, Wellenspitzen plan zu schleifen, und anschließend beispielsweise mit einer Walze, einer schlanken Spritze, einer Maske oder dergleichen Leim auf die Wellenkuppen aufzubringen, um dann einen Verbund mit einer anderen gewellten Platte oder einer ebenen Platte herzustellen. Diese minimale Beleimung führt dazu, dass nicht die gesamten Platten mit einem Film belegt sind. Es ergibt sich weniger Ausdünstung, ein geringeres Gewicht und die Materialeigenschaften des Faserplattenmaterials kommen zur Geltung.

Es wird eine Faserplatte aus lignocellulose-haltigen Fasern, insbesondere Holzfasern, und Bindemittel vorgeschlagen, wobei diese eine eigenstabile in wenigstens einer Richtung verlaufende, periodisch wiederkehrende dreidimensionale Verformung aufweist.

Die Faserplatte ist in plattenförmiger aus lignocellulose-haltigen Fasern bestehender Formkörper. Er ist im Wesentlichen plattenförmig. Während eine herkömmliche Platte im Wesentlichen als mit ebenen Oberflächen versehener Quader bezeichnet werden kann, welcher durch Seitenkanten und zwei äußere Oberflächen definiert ist, welche Oberflächen in einer durch die Seitenkanten definierten Ebene liegen, bedeutet dreidimensionale Verformung im Sinne der vorliegenden Erfindung, dass die Platte an sich bei im Wesentlichen zueinander parallelen Oberflächen in einer senkrecht zu den Seitenkaten liegenden Richtung verform ist. Dies können im einfachsten denkbaren Fall einfache Strukturen sein, beispielsweise Pyramiden. Eine dreidimensionale Verformung umfasst jedoch Knicke, Winkel, Poren und dergleichen.

Eigenstabil im Sinne der vorliegenden Erfindung bedeutet, dass die Platte nach ihrer Herstellung in ihrem verformten Zustand mechanisch fest verbleibt, also nicht flexibel in dem Sinne ist, dass die Verformung entfernbar ist. Sie mag eine gewisse Elastizität aufweisen, ist jedoch insofern fest genug, als sie ihre verformte Form beibehält.

In wenigstens einer Richtung verlaufend und periodisch wiederkehrend bedeutet aber, dass sich die Verformung entlang einer der Plattenrichtung ständig fortsetzt und wiederholt. So kann eine Platte beispielsweise wellenförmig ausgebracht werden, sie kann Winkel aufweisen oder dergleichen. Bringt man entlang einer Plattenrichtung einen Querschnitt an, so dass die Verformung seitlich betrachtet werden kann, zeigt diese eine Art Welle, einen Sägezahn, ein Rechteckprofil oder dergleichen.

Die Verformung kann schräg zu den Seitenkanten verlaufen, was sich durch Konfektionierung ergibt. Sie kann auch im Grunde parallel zu einer der Seitenkanten verlaufend ausgebildet sein.

Die Platte wird von der Rohdichte her als HDF-Platte ausgebildet. Sie enthält vorzugsweise lange Fasern, beispielsweise 15 bis 20 mm.

Durch die Ausbildung der Faserplatte entsteht eine Platte, die im Verhältnis zu ihrer Rohdichte ein großes Volumen ausfüllt. Raumvolumen im Sinne der vorliegenden Erfindung bezeichnet den im Wesentlichen quaderförmigen Raum, der von der Platte ausgefüllt wird. Während Rohdichte oder Plattenvolumen selbst sich auf den feststofflichen Bereich der Platte beziehen ist das Raumvolumen dadurch gebildet, dass ebene Flächen auf den obersten und untersten Vorsprüngen der verformten Platte durch umlaufende Seitenkanten zu einem die Platte vollständig umschließenden Quader ergänzt werden. Dieser Quader hat ein Volumen, welches deutlich größer ist als das durch den feststofflichen Bereich der Platte selbst gebildete Volumen. Die Plattendicke wird gemäß einem vorteilhaften Vorschlag der Erfindung mindestens um den Faktor 3 von der Volumenhöhe überschritten.

Die Platte weist als besonderen Vorteil auf, dass sie erhöhte mechanische Eigenschaften mit einem geringen Raumgewicht verbindet. Durch die Ausbildung der Verformung wird die Platte in sich mechanisch stabiler. Es ist allgemein bekannt, dass gebogene oder geknickte Elemente bei Druckbelastung entlang der Knickachse besonders stabil sind. Im vorliegenden Fall ist die Platte aber auch aufgrund ihrer Rohdichte in Verformungsrichtung ausgesprochen stabil und bruchfest.

Die Platte hat den Vorteil, die Anwendungsbereiche solcher Platten erheblich zu erweitern. Eine solche Platte kann aufgrund ihres geringen Gewichtes im Vergleich zum Raumvolumen beispielsweise als Füllung eingesetzt werden. Derartige Einsatzbereiche ergeben sich beispielsweise bei der Herstellung von Türen und Wandelementen. Aufgrund ihrer mechanischen Festigkeit kann die Fläche angebohrt werden und Schrauben halten. Sie kann Nägel halten.

Sie kann direkt mit sogenannten Umleimern versehen werden, das heißt Leisten, die auf die Seitenkanten geklebt oder sonst wie befestigt werden. Aufgrund der dreidimensionalen Verformung bietet die Platte an den Seitenkanten eine erhebliche Befestigungsfläche.

Die Platten können auch im Rahmen von Sandwichaufbauten verwendet werden. Sie können mit gleichartigen, dreidimensional verformten Platten verbunden werden, indem diese übereinander gelegt und wie auch immer fixiert werden. Dabei ist es von Vorteil, wen die dreidimensionalen Verformungen zueinander winklig angeordnet werden. Werden zwei identische Platten beispielsweise mit einer Wellenkontur miteinander verbunden, so können diese rechtwinklig zueinander aufeinandergelegt werden. Auf diese Weise ergeben sich eine Vielzahl von Berührungspunkten, ein erhebliches Raumvolumen bei sehr geringem Plattengewicht. Die mechanische Stabilität ist immens.

Es können auf die Oberfläche dreidimensional verformter erfindungsgemäßer Platten ebene Platten aufgesetzt werden. Auf diese Weise ergeben sich in Bezug auf das Raumvolumen sehr leichte aber äußerst stabile Platten, wenn die ebenen Deckplatten beispielsweise sehr dünne HDF-Platten sind.

Mit der Erfindung werden eine Faserplatte sowie ein neuartiges Herstellungsverfahren bereitgestellt, welche es ermöglichen, unter Verwendung einer neuartigen Herstellungseinheit mit überschaubarem wirtschaftlichem Aufwand Faserplatten mit besonderer mechanischer Stabilität bei zeitgleichem geringem Gewicht bezogen auf das Raumvolumen herzustellen. Weitere Vorteile und Merkmale der Erfindung ergeben sich aus der folgenden Beschreibung anhand der Figuren. Dabei zeigen:
- Fig. 1: Eine schematische Seitenansicht einer erfindungsgemäßen Faserplatte;
- Fig. 2: eine perspektivische Teilansicht einer Faserplatte gemäß der Erfindung und
- Fig. 3: eine schematische Seitenansicht einer Sandwichplatte.

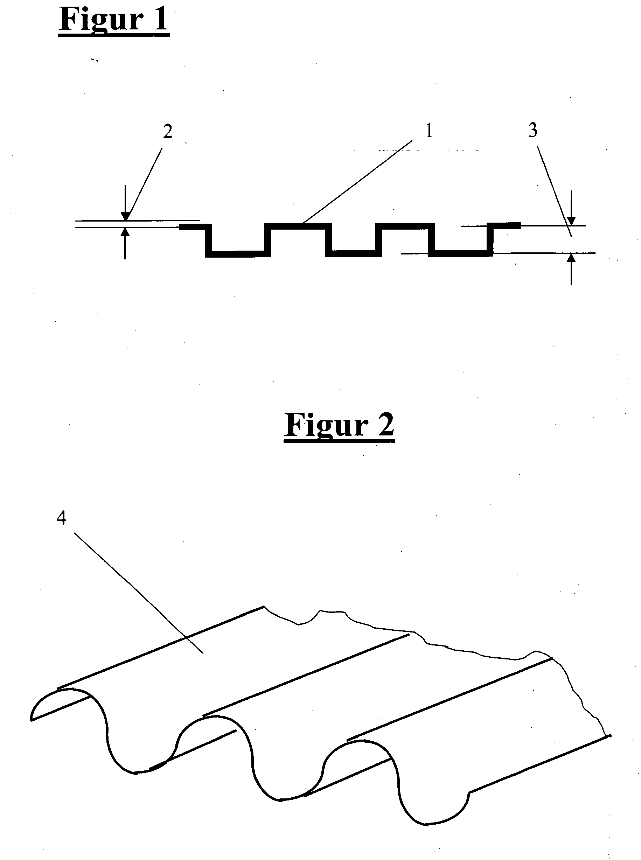

Figur 1 zeigt eine Faserplatte 1, welche im gezeigten Ausführungsbeispiel eine fortschreitende rechteckige Wellenstruktur aufweist. Zur Erläuterung ist die Bemaßung der Plattendicke 2 einerseits und der Plattenhöhe 3 andererseits gezeigt. Die Plattenhöhe ist zusammen mit dem Umfang der Platte das Maß zur Errechnung des Raumvolumens der Platte. Es zeigt sich, dass ein sehr großes Raumvolumen durch eine sehr eigenstabile dünne Platte 1 erzielbar ist, welche nur die Dicke 2 aufweist.

Figur 2 zeigt schematisch eine Platte 4 mit einem im Wesentlichen sinusförmigen Verformungsverlauf.

Es ist ganz offensichtlich, dass diese Platten, im Sandwich, aber auch in Alleinstellung, eine hohe mechanische Festigkeit bei einem geringen Raumgewicht bieten.

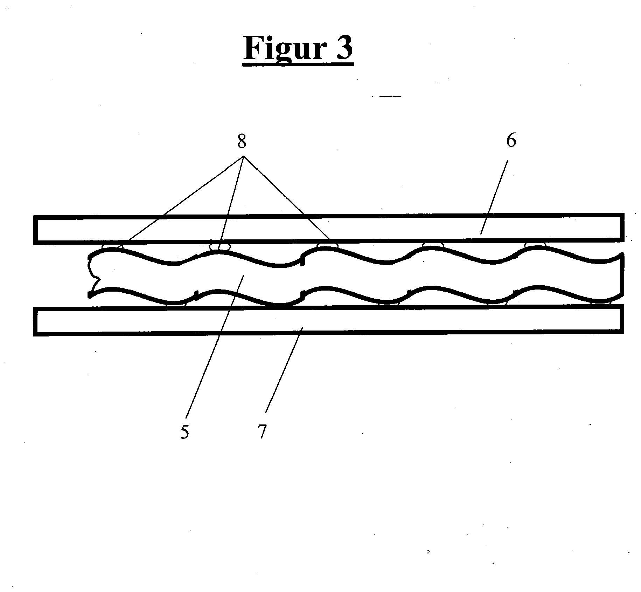

Wie die in Figur 3 gezeigte Darstellung einer Sandwichplatte zeigt, wird beispielsweise eine gewellte und verformte Platte 5 nach der Erfindung mit zwei ebenen Platten 6 und 7 an beiden Oberflächen beplankt. Es ergeben sich Berührungslinien entlang der Wellengruppen. Die mit 8 angedeuteten Bereiche sind Verbindungsbereiche, in denen Kleber aufgebracht ist. Die Kuppen der Platten 5 können vorher eingeebnet werden, beispielsweise durch planschleifen. Der Kleber kann in den Verbindungsbereichen 8 mittels einer Walze, durch linienförmiges Sprühen, mittels einer Maske oder dergleichen aufgebracht werden. Durch anschließendes Verpressen entsteht der Sandwichverbund. Im Bereich der unteren ebenen Platte sind entsprechende Verbindungsbereiche in gleicher Weise ausgebildet.

### Bezugszeichenliste

- 1: Platte
- 2: Dicke
- 3: Höhe
- 4: Platte
- 5: verformte Platte
- 6: ebene Platte
- 7: ebene Platte
- 8: Verbindungsbereiche

## Patentansprüche

1. Verfahren zur Herstellung einer Faserplatte (1) aus Holzfasern und Bindemittel, welche eine eigenstabile, in wenigstens einer Richtung verlaufende, periodisch wiederkehrende dreidimensionale Verformung aufweist, die wellenförmig ausgebildet ist, wobei die Platte ein durch Dampfbeaufschlagung aktivierbares Bindemittel aufweist, das Verhältnis von Plattendicke (2) zu Volumenhöhe (3) mindestens 1:3 ist, wobei die Platte einen sinusförmigen Verformungsverlauf aufweist, wobei eine vorbestimmte Menge trockener Fasern und Bindemittel auf einem Transportband ausgebracht und vorverdichtet sowie einem Verformungsbereich zugeführt wird, in welchem die für die Fertigstellung erforderliche Temperatur und Feuchte in die Fasermenge eingebracht und diese in einer Verformungsstation unter einem geeigneten Druck mit der Verformung versehen und unmittelbar ausgehärtet wird, **dadurch gekennzeichnet, dass** das Bindemittel durch Dampfbeaufschlagung aktiviert wird, wobei zur Verformung und Aushärtung ein beheiztes Walzenpaar eingesetzt wird, wobei zwischen den Walzen des Walzenpaars die Verformung in die aktivierte Fasermenge eingebracht und durch unmittelbares Aushärten beibehalten wird, und dass die Faserplatte (1) als HDF-Platte ausgebildet ist.

2. Verfahren nach Anspruch 1, **dadurch gekennzeichnet, dass** die Herstellung vom Ausstreuen bis zur Ausfertigung in einem kontinuierlichen Prozess erfolgt.

3. Verfahren nach Anspruch 1 oder 2, **dadurch gekennzeichnet, dass** die Einstellung von Temperatur und Feuchte unmittelbar vor der Verformung und Aushärtung erfolgt.

4. Verfahren nach einem der Ansprüche 1 bis 3, **dadurch gekennzeichnet, dass** die Verformung und Aushärtung gleichzeitig erfolgen.

5. Verfahren nach einem der vorhergehenden Ansprüche 1 bis 4, **dadurch gekennzeichnet, dass** die ausgehärtete Platte anschließend konfektioniert wird.

## Claims

1. Method for producing a fibreboard panel (1) from wood fibres and a binder, which panel has a self-stable three-dimensional deformation which extends in at least one direction and repeats periodically and which is corrugated, wherein the panel has a binder which can be activated by the application of steam, wherein the ratio of the thickness of the board (2) to the height of the volume (3) is at least 1 : 3, the board having a sinusoidal deformation curve, a predetermined quantity of dry fibres and binder being spread onto a conveyor belt and pre-compressed and fed to a deformation zone in which the temperature and moisture required for finishing are introduced into the quantity of fibres and the latter is subjected to deformation in a deformation station under a suitable pressure and is cured immediately, **characterized in that** the binder is activated by application of steam, a pair of heated rollers being used for deformation and curing, the deformation being introduced into the activated quantity of fibres between the rollers of the pair of rollers and being maintained by immediate curing, and **in that** the fibreboard panel (1) is designed as an HDF panel.

2. Method according to claim 1, **characterized in that** the production is carried out in a continuous process from spreading to finishing.

3. Method according to claim 1 or 2, **characterized in that** the adjustment of temperature and humidity takes place immediately prior to deformation and curing.

4. Method according to any of claims 1 to 3, **characterized in that** the deforming and curing are performed simultaneously.

5. Method according to any of the preceding claims 1 to 4, **characterized in that** the cured panel is then ready-made.

## Revendications

1. Procédé de fabrication d'un panneau de fibres (1) à partir de fibres de bois et d'un liant, qui présente une déformation tridimensionnelle autostable, s'étendant dans au moins une direction et se répétant périodiquement, qui est ondulée, le panneau présentant un liant activable par une sollicitation en vapeur, le rapport entre l'épaisseur du panneau (2) et la hauteur du volume (3) étant d'au moins 1 : 3, le panneau présentant une courbe de déformation sinusoïdale, une quantité prédéterminée de fibres sèches et de liant étant déversée et pré-comprimée sur une bande transporteuse et amenée à une zone de déformation dans laquelle la température et l'humidité nécessaires à la finition sont introduites dans la quantité de fibres et celle-ci est soumise à la déformation dans un poste de déformation sous une pression appropriée et est immédiatement durcie, **caractérisé en ce que** le liant est activé par application de vapeur, une paire de cylindres chauffés étant utilisée pour la déformation et le durcissement, la déformation étant introduite dans la quantité de fibres activée entre les cylindres de la paire de cylindres et étant maintenue par durcissement immédiat, et **en ce que** le panneau de fibres (1) est conçu comme un panneau HDF.

2. Procédé selon la revendication 1, **caractérisé en ce que** la fabrication s'effectue en un processus continu depuis l'épandage jusqu'à la finition.

3. Procédé selon la revendication 1 ou 2, **caractérisé en ce que** l'ajustement de la température et de l'humidité a lieu immédiatement avant la déformation et le durcissement.

4. Procédé selon l'une des revendications 1 à 3, **caractérisé en ce que** la déformation et le durcissement sont effectués simultanément.

5. Procédé selon l'une des revendications précédentes 1 à 4, **caractérisé en ce que** le panneau durci est ensuite confectionné.
